# EUROPEAN PATENT APPLICATION

(11) **EP 4 497 550 A1**
(43) Date of publication of application: **29.01.2025**
(21) Application number: 23188335.6
(22) Date of filing: 28.07.2023
(51) Int. Cl.: B25J 9/16, G05B 19/4155, G05B 19/418

(54) **METHOD AND DEVICE FOR PLANNING EXECUTIONS OF OPERATION SEQUENCES ACHIEVING GOAL STATES OF TECHNICAL SYSTEM WORKFLOWS AND CHECKING THEM THROUGH SYSTEM SIMULATION OR SYSTEM HARDWARE EXECUTION**

(71) Applicant: Siemens Aktiengesellschaft, 80333 München (DE)
(72) Inventor: Albrecht, Sebastian, 85399 Hallbergmoos (DE); Kast, Bernd, 89335 Ichenhausen (DE); Schürmann, Bastian, 81737 München (DE); Deroo, Frederik, 85399 Hallbergmoos (DE)
(74) Representative: Siemens Patent Attorneys

(57) **Abstract**

In order to plan and check executions of operation sequences (OPS1, OPS2) achieving goal states of technical system work-flows, by which, when no operation sequence is found to achieve a goal state ("non-finding operation sequence") of a simulated or in-hardware-executed technical system workflow, causes for the "non-finding operation sequence" can be determined without any error-prone process, it is proposed that <1> for a workflow (WF) of a technical system (TS) a workflow related planning domain (PD_{WF}) is given by deploying (dpi) workflow related facts (FC_{WF}), which are based on a digital twin (DT) and each a workflow related set of planning operators and debugging operators, <2> a workflow related goal state is specified, <3> by a planning approach (PA) according to a defined planning task (PT) <3a> executions of the at least one selected planning operator are checked iteratively to find a full plan (PL_{f}) comprising first operation sequences (OPS1) to achieve the goal state by a primary query loop (PQL) until the plan is found or a stopping criterion (SCT) is reached, <**3b**> when in <**3a**> the full plan is found, the executions of the found full plan are checked iteratively by a secondary query loop (SQL) until the goal state is achieved, <**3c**> when in <**3a**> the stopping criterion is reached, for determining a reason (RS) why no full plan could be found executions of at least one partial plan (PLₚ) on the way to find the full plan comprising second operation sequences (OPS2) and chosen debugging operator are checked iteratively by a tertiary query loop (TQL) until an intermediate goal state (IGS) regarding the partial plan is achieved and if due to the intermediate goal state the reason for not finding the full plan is determined it is necessary to redefine the planning task.

## Description

The invention refers to a method for planning executions of operation sequences achieving goal states of technical system workflows and checking them through system simulation or system hardware execution according to the preamble claim 1 and a device for planning executions of operation sequences achieving goal states of technical system workflows and checking them through system simulation or system hardware execution according to the preamble claim 9.

Technical systems such as especially robotic systems contain components for flexible or even autonomous production, which depend on automatic ordering of production steps known as orchestration. When the technical or robotic system include for instance robots doing manipulations the task of orchestrating the automatic ordering of production steps can neither be solved solely on a symbolic level nor solely on a sub-symbolic, i.e., continuous, level.

For instance continuous properties of these robot manipulators like poses, torques, geometries are important to assure that the movements are feasible on the technical or robotic systems. On the other hand, sequences of tasks such as grasping or assembling change the configuration of the product and / or the technical or robotic system and thus can only be efficiently captured on a symbolic level for planning.

The more flexible technical system workflows have to be, the more intertwined these two aspects become. Thus, for full flexibility the planning approaches must consider both aspects in a combined manner which results in complex planning tasks.

This complexity can be reduced by a hierarchical planning, which is described in the following published patent documents EP 3 446 185 B1, WO 2018/121904 A1, WO 2020/025103 A1 und EP 3 978 202 A1.

So, the hierarchical planning can compute such sequences of tasks even for parallel processes and replanning due to plan deviations if they are obtained by measurements. Hierarchies focus on specific aspects while omitting others and thereby the hierarchies of the planning are used in the context of reducing the complexity to trade possibly optimality for feasibility. However, specifying tasks for any planner that then can be executed on real hardware is an error-prone process.

If the planning approach does not find a solution, e.g., a motion planner cannot find a collision-free path, a user of the motion planner is left alone without much information. So normally, little to no information is offered, where exactly the planning failed or what went wrong and for what reason.

Therefore, the interaction of debugging planning is very tedious and requires a lot of expert knowledge, in particular task and motion planning. This is especially true for a hierarchical planning approach, because depending on the current hierarchy level certain information the user thinks to be obvious and might not be available to the planner at that level.

The cited hierarchical planning approach is rather new. Currently, one can visualize a hierarchical plan by showing the point where the planning failed and corresponding available instances. Then the user must check either visually or by small test scripts which steps of the sequences of tasks can be applied, and which fail. By using debugging features of a standard programming in an "Integrated Development Environment <IDE>", one can then check the actual hardware execution of the failing steps to find the cause for the failure.

This approach is feasible on an expert level but lacks any intuition and is time-consuming due to a missing graphical feedback.

In classical automation an engineer would specify a sequence of tasks in advance and setup a motion generation for each of these tasks separately. If one of the sub-motions fails, the task is step by step modified:
By varying required poses at start and end, by changing a configuration, e.g., positions of objects in a working environment of the technical or robotic system , or by introducing intermediate points. That way one would iterate towards a feasible motion for the sub-task. And continue with the process for all following sub-motions.

It is an objective of the invention to propose a method and device for planning executions of operation sequences achieving goal states of technical system workflows and checking them through system simulation or hardware execution, by which, when no operation sequence is found to achieve a goal state ("non-finding operation sequence") of a simulated or in-hardware-executed technical system workflow, causes for the "non-finding operation sequence" can be determined without any error-prone process.

This objective is solved with regard to a method defined in the preamble of claim 1 by the features in the characterizing part of claim 1.

Moreover the objective is solved by a computer-implemented tool carrying out the method of one of the claims 1 to 7 according to claim 8.

The objective is further solved with regard to a device defined in the preamble of claim 9 by the features in the characterizing part of claim 9.

The main idea of the invention according to the claims 1 and 9 is to plan executions of operation sequences achieving goal states of technical system workflows and check them through system simulation or hardware execution, wherein <**1**> for a workflow of a technical system a workflow related planning domain is given by deploying workflow related facts, which are based on a digital twin, a workflow related set of planning operators and a workflow related set of debugging operators (Remark: An operator is a realization of a task which can be used for planning, execution, and/or debugging and will be defined in more detail further below.), <**2**> a workflow related goal state is specified, which comprises or consists of a set of desired goal instances, <**3**> a planning task is defined for the specified goal state and according to the deployed planning domain based on the facts and for at least one selected planning operator of the workflow related set of planning operators, <**4**> by a planning approach according to the defined planning task <**4a**> executions of the at least one selected planning operator are checked iteratively in order to find a full plan comprising first operation sequences to achieve the goal state by a primary query loop until the full plan achieving the goal state is found or a stopping criterion of the technical system workflow is reached, <**4b**> when in <**4a**> the full plan is found, the executions of the found full plan achieving the goal state are checked iteratively by a secondary query loop until the goal state is achieved, <**4c**> when in <**4a**> the stopping criterion is reached, for determining a reason why no full plan achieving the goal state could be found, executions of (**i**) at least one partial plan on the way to find the full plan achieving the goal state comprising second operation sequences and (**ii**) at least one chosen debugging operator of the workflow related set of debugging operators regarding the selected partial plan are checked iteratively by a tertiary query loop until an intermediate goal state regarding the partial plan is achieved and if due to the intermediate goal state the reason for not finding the full plan is determined it is necessary to redefine the planning task otherwise <**4c**> is carried out until due to the achievement of the intermediate goal state the reason for not finding the full plan is determined.

So in more detail, according to the primary query loop of the planning approach in consecutive loop iterations (**1**) the at least one selected planning operator is executed, (**2**) primary control commands due to the at least one executed selected planning operator are generated, (**3**) the primary control commands to simulate the technical system workflow are accordingly applied and (**4**) the system simulation through primary measurement results of measurements are accordingly checked until the full plan achieving the goal state is found or the stopping criterion of the technical system workflow is reached.

Further in more detail, according to the secondary query loop of the planning approach in which in consecutive loop iterations (**1**) the full plan is executed, (**2**) secondary control commands due to the executed full plan are generated, (**3**) the secondary control commands are accordingly applied to simulate or to execute in hardware the technical system workflow and (**4**) the system simulation or system hardware execution through secondary measurement results of measurements are accordingly checked until the goal state is achieved.

Additionally in more detail, according to the tertiary query loop of the planning approach in which in consecutive loop iterations (**1**) the at least one selected partial plan is executed, (**2**) the at least one chosen debugging operator is executed, (**3**) tertiary control commands due to the at least one partial plan and the at least one chosen debugging operator are generated, (**4**) the tertiary control commands to simulate or to execute in hardware the technical system workflow are accordingly applied and (**5**) the system simulation or system hardware execution through tertiary measurement results of measurements are accordingly checked until the intermediate goal state regarding the partial plan is achieved and if due to the intermediate goal state the reason for not finding the full plan is determined it is necessary to redefine the planning task.

Finally in more detail, the planning task is redefined by using different workflow related inputs concerning at least one of specifying another workflow related goal state, deploying other workflow related facts, and deploying additional workflow related planning operators.

Further advantageous developments of the invention are given by the dependent claims.

According to the claims 2 and 10 it is advantageous that the tertiary measurement results are or system states of the digital twin updated by the tertiary measurement results are fed back to a graphical user interface for outputting them for a user for control purposes or for considering them by a user for the graphical user interface based inputs.

So, according to the claims 3 and 11 it is beneficial when one or more planning operators of the at least one selected planning operator are selectable several times for checking the executions iteratively in order to find the full plan comprising the first operation sequences. This is beneficial, because in many applications multiple execution of certain operators are required.

Moreover according to the claims 4 and 12 it is advantageous when the iterative check of executions of the selected partial plan and the at least one chosen debugging operator by the tertiary query loop is designed such that - in the consecutive loop iterations until the intermediate goal state regarding the partial plan is achieved and due to the intermediate goal state the reason for not finding the full plan is determined - the selected partial plan is kept unchanged for the execution while the at least one chosen debugging operator is executed, the tertiary control commands are generated due to the unchanged partial plan and the at least one chosen debugging operator, the tertiary control commands to simulate or to execute in hardware the technical system workflow are applied accordingly and the system simulation or hardware execution are checked accordingly through the tertiary measurement results of the measurements.

This is advantageous, because it allows not to start each debugging task from the very beginning, but to start from intermediate states.

Furthermore according to the claims 5 and 13 it is of a particular advantage when the planning approach is based on hierarchical planning. In the context of the present invention especially by using debugging operators there is the advantage when doing a planning that due to the planned steps on hierarchical levels, the partial goal to be achieved is easily and unambiguously specified - in addition, the number of objects of the technical system to be considered is determined by the hierarchy, e.g. machines, components, robots, etc., and their possible actions are much smaller. This helps the user to determine more quickly where the cause of an error in the planning may lie.

In addition according to the claim 6 and 14 the invention can be used advantageously when the technical system is a robotic system.

Finally, according to the claim 7 it is beneficial the technical system workflow is outputted via a data logger of the technical system.

This has the advantage because it allows to store the resulting workflow for offline use.

In the case of the robotic system and the corresponding workflows there can be a discrete manufacturing with robot arms, wherein controls are, e.g., torques, joint values or reference trajectories, etc.

In the case of the technical system and the corresponding workflows there can be an orchestration of continuous processes, e.g., chemical, biological, etc., and routing of liquid, gaseous product flows, wherein controls are, e.g., temperature of a heater, rotational velocity of a mixer, status of a valve etc.

In the case of the technical system and the corresponding workflows there can be an autonomous lab assistant, e.g., machine tending, handling of materials, etc., for instance in the pharma domain, wherein controls are a combination of the two use cases above.

In the case of the technical system there can be a flexible adaption of workflows depending on machine availability, process times and/or current demands in factories, wherein controls are, e.g., starting times for machines, identifiers (IDs) and types of components or elements to be processed, etc.

In the case of the robotic or technical system and the corresponding workflows there can be a task allocation for a fleet of "Automated Guided Vehicles <AGVs>" including additional tasks such as anomaly detection, wherein controls are, e.g., locations to be reached, object identifiers (IDs) to be transported, starting times, reference trajectories, etc.

In the context of the invention with the used terms the following well-known term explanations are given:
I. An operator is an instruction that maps a list of input instances to output instances. This instruction can be realized by programming logical conditions, evaluation a simulation or reading sensor data. For the hierarchical planning as a special case of general planning the operators can also be structured hierarchically - this means a coarser operator uses input and yields output instances that correspond to more abstract concepts than those of more detailed operators.
II. A concept is a structure specifying a list of attributes that themselves are concepts or base types. This corresponds to a class in object-oriented programming. Depending on the chosen attributes for each concept, a software automatically computes a hierarchy which is analogue to an inheritance structure in programming.
III. An instance is a realization of such a concept. It specifies for each attribute a value of a given base type or an instance of the concept specified for the attribute. This recursive definition results in tree-structures full of base type values representing a fact. This corresponds to an instance in object-orient programming.
IV. A fact is an instance that is assumed to be a part of a current state. The facts are either directly specified by a user or imported from sensors or data bases.
V. A goal is an instance that describes fully or partially a desired goal state of the technical system workflow - this is a partially ordered set of operators. A representation of such a set is a precedence graph where a directed edge goes from one node to the other if one operator (represented by a first node) has to be successfully finished before the other operator (represented by the second node) can start. The goal state is specified by the user.

A planning task is a combination of facts describing a start configuration, the goal state specifying what has to be accomplished, and operators (e.g. hierarchical) capturing all actions that can be done.

VI. A planning approach (e.g. hierarchical) is a software that searches for an at least partially ordered set of operators as known as a plan or workplan that transforms the facts as initial instances into the goal state. The set of operators is a precedence graph capturing which operator has to be successfully executed before some other is started.

The planning approach can run in an offline mode where the plan is a dedicated output that then can be used by an execution engine to control the actual hardware. But it can also run in an online mode where the execution is a most detailed planning level such that the hardware is controlled adaptively. This means the planning approach iteratively generates plans on all levels of the hierarchy, but the most detailed plan is already executed when fully obtained.

VII. An execution engine executes a plan on the hardware.

The scenario on the basis of a preferred hierarchical planning as one possible embodiment of the invention can be sketched in principle as follows:
A hierarchical planner (hierarchical planning based on user inputs) plans in different levels of refinements. If no solution is found in a certain level of refinement, a "Graphical User Interface <GUI>" provides the user with specific information on a subtask. This means it can be clearly stated which sub-task currently fails and which operators are currently considered in this sub-planning tasks to map initial instances (facts) towards desired instances (goals) and with a choice of possible debugging operators so that the user can select and test the behavior.

Additionally, lists of additional operators are displayed. These contain both additional operators that might be used to extend the possibilities of a planning or sub-planning task and special debugging operators. The latter is a key feature to get as close as possible to the cause of failure and at best provide visual feedback.

A debugging operator is a special type of operator which is designed to make debugging of failed planning attempts easier. Its realization can have different forms including allowing a user to execute parts of a normal operator call in a stepwise manner. Other possibilities include performing tasks slower or with less force (i.e., safer) or to display additional information such as internal planning states to the user via a graphical user interface <GUI>. Preferable aspects of debugging operators can be an interactive behavior between the user and the system via the GUI including additional user inputs during execution and the output of additional information for the user to reconstruct the reason for planning failure.

Central are the debugging operators, which are used for example for motion planners. These allow to proceed towards desired motion goals even if the final configuration is not feasible, e.g., due to collisions. This means that the motion starts normally and stops near the point of failure. Such a debugging operator can be visualized in a 3D environment. In such a visualization it is possible to identify failure causes intuitively even if one is no expert on the operator implementation.

Additionally, it is possible to manually trigger execution of some operators and thereby test even complex task sequences that are assumed to solve the planning or sub-planning task.

The execution of the operators depends on the current abstraction level. On the abstract levels it is a simulation environment but on the most detailed level this can involve the real hardware. On this hardware level it is then possible to step through a hierarchically derived partial plan, where a failure happened, and the user may add additional operators to determine missing or faulty information or to adapt parameters until a step or sub-step is successful.

The sketched scenario has the following procedural structure:
# A planning domain describing facts and nominal operators as well as special debugging operators.
   - A selection of these elements describes together with goals a planning task to be solved.
   - The planning domain as component can be realized via an additional "Graphical User Interface <GUI>", or a text editor.
   - The planning domain is also part of the nominal hierarchical planning.
# A planning approach gets a planning task from the planning domain component and tries to find a plan that transforms initial instances (facts) into desired instances (goals).
   - The planning approach is also part of the nominal hierarchical planning.
   - If a full plan is found, it can be forwarded to an execution engine.
   - If only a partial plan is found, the situation of this disclosure occurs. The partial plan is then forwarded to the "Graphical User Interface <GUI>".
# The "Graphical User Interface <GUI>" combines as described above three elements: a visualization of the hierarchy of the partial plan, selection menus for operators, and a visualization, e.g., 3D visualization.
   - By selecting an interesting plan step and some nominal operators and possibly including debugging operators a step-by-step call of the operators can be realized.
   - The operators and the possibly debugging operators are called with selected instances of the plan step and executed via the execution engine.
   - The execution engine is also part of the scenario.
   - The execution engine triggers the calls of the operators.
   - The operators are executed either in software or hardware depending on the level of abstraction and the implementation of the operator.
   - An execution result, e.g., joint trajectories, are then send to the visualization component of the "Graphical User Interface <GUI>".
   - Fixing the task specification and general setup is not directly part of the invention being disclosed by the present application, but it closes the loop and can be part of the planning domain with the GUI.

The above sketched hierarchical planning scenario is remarkable by following aspects:
- Debugging (hierarchical) planning is very tedious and requires a lot of expert knowledge. The debugging operators allow an unexperienced user to directly see the mismatch between expected behavior and real behavior and therefore to solve a problem.
- The manual triggering of additional operators and stepping through a plan allows to fine-tune a current planning level. This allows to identify aspects/information missing in a digital model of the technical or robotic system and fix them on the fly.
- In motion planning (besides planning tasks also sub-planning tasks are considered here) a visual debugging is known. The key difference to general or hierarchical planning is that by the visual debugging only one operation is considered - this means that a resulting sub-plan is "just" a motion path. On the contrary, in the general or hierarchical planning setup several operators exist and commonly only a sequence of such operators can solve the planning or sub-planning task. Thus, these motion planning features are a building stone of the sketched scenario, but on their own they cannot solve the cited objective of the invention. Only when allowing to step through the hierarchy of planning task, and selecting and executing operators in the debugging mode provides the required flexibility to determine a cause of failure and is a feasible strategy to handle the task complexity.
- In 3D object design a related problem exists, where one must determine if a certain object allows collision-free assembly. The 3D object design visualizes then which parts are in collision. However, the central difference here is that production hardware is additionally considered here. Whether an object can be grasped and placed depends on the technical or robotic system and a production hardware of the robot, e.g. the gripper geometry of the robot, the robots kinematics and relative pose, the assembly status, etc. Therefore, this debugging step is no static problem that can be solved pair-wise, but it requires to actually consider all motions and task sequences.

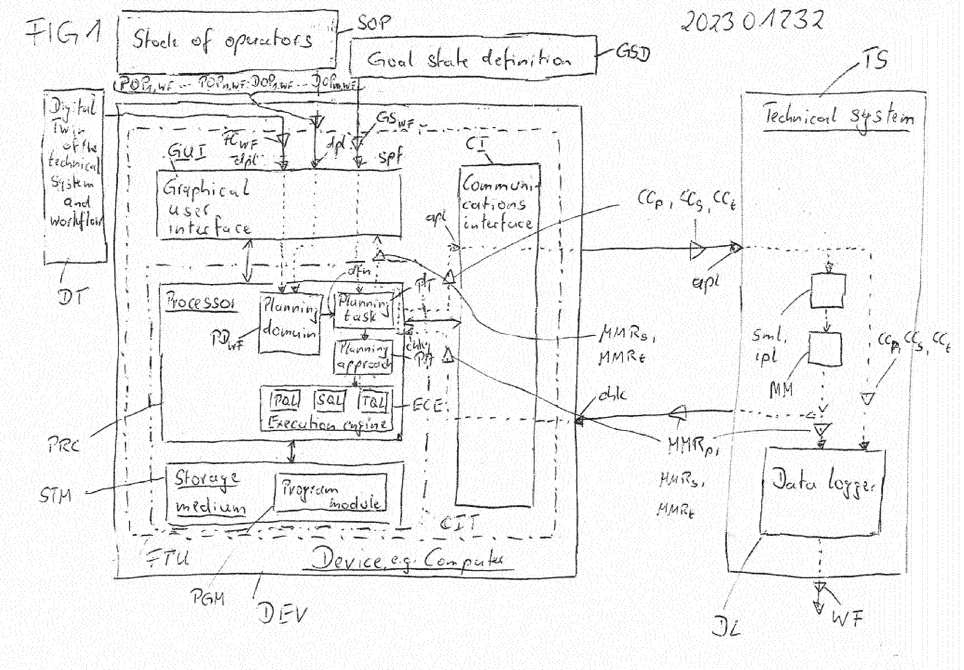

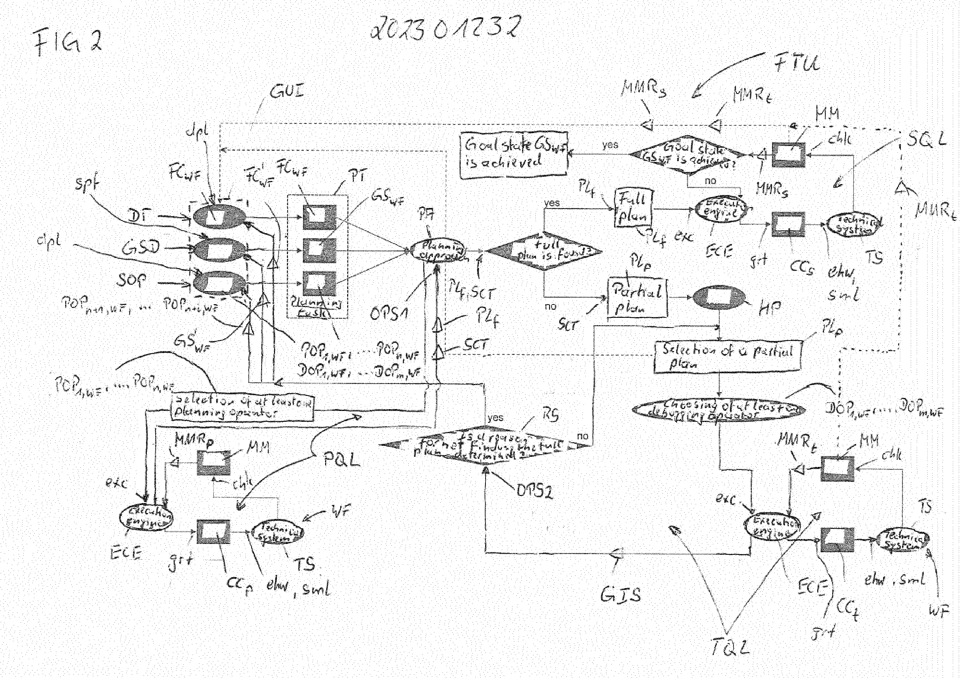

Moreover, additional advantageous developments of the invention arise out of the following description of a preferred embodiment of the invention according to FIGURES 1 and 2.
They show:
FIGURE 1 a device for planning executions of operation sequences achieving a goal state of a workflow of a technical system and checking them through system simulation or hardware execution,
FIGURE 2 functionality and way of working of a functional unit implemented in the device according to the FIGURE 1.

FIGURE 1 shows a device DEV for planning executions of operation sequences achieving a goal state GS_{WF} of a workflow WF of a technical system TS, which is for example a robotic system, and wherein the executions of the operation sequences achieving the goal state GS_{WF} are checked through system simulation or hardware execution.

For this purpose the device DEV includes a processor PRC, a graphical user interface GUI, a communications interface CI and a non-transitory, processor-readable storage medium STM having processor-readable program-instructions of a program module PGM for planning and checking the executions of the operation sequences, which is stored in the non-transitory, processor-readable storage medium STM.

While the two interfaces GUI, CI are connected to the processor PRC, the processor PRC executing the processor-readable program-instructions of the program module PGM forms on one hand with the non-transitory, processor-readable storage medium STM including the processor-readable program-instructions of the program module PGM a computer-implemented tool CIT for planning the executions of the operation sequences achieving the goal state GS_{WF} of the workflow WF of the technical system TS which then are checked through system simulation or hardware execution and on the other with the graphical user interface GUI, the communications interface CI and the non-transitory, processor-readable storage medium STM with the processor-readable program-instructions of the program module PGM a functional unit FTU for planning the executions of the operation sequences achieving the goal state GS_{WF} of the workflow WF of the technical system TS which then are checked through system simulation or hardware execution.

The computer-implemented tool CIT is preferably a computer-program-product, which is for instance designed as an application software, called as APP, and loadable into the device DEV, so that it can be executed by the processor PRC.

The so formed functional unit FTU is designed in such a way that the goal state GS_{WF} of the considered technical system workflow WF is specified spf according to a goal state definition GSD and inputted via the graphical user interface GUI into the processor PRC of the device DEV and the technical system workflow WF is based on a workflow related planning domain PD_{WF}, which is part of the processor PRC executing the processor-readable program-instructions of the program module PGM for planning and checking the executions of the operation sequences.

The goal state definition is normally and preferably done by a user using the device DEV for planning the executions of the operation sequences achieving the goal state GS_{WF} the workflow WF of the technical system TS and checking them through system simulation or hardware execution.

The planning domain PD_{WF} is given by a stock of operators SOP, which contains a workflow related set of planning operators POP_{1,WF}, ..., POP_{n,WF} and a workflow related set of debugging operators DOP_{1,WF}, ..., DOP_{m,WF}. The workflow related set of planning operators POP_{1,WF}, ..., POP_{n,WF} and a workflow related set of debugging operators DOP_{1,WF}, ..., DOP_{m,WF} are deployed dpi and inputted via the graphical user interface GUI into the processor PRC of the device DEV. This deployment is also normally and preferably done by the user using the device DEV for planning the executions of the operation sequences achieving the goal state GS_{WF} the workflow WF of the technical system TS and checking them through system simulation or hardware execution.

Moreover, the planning domain PD_{WF} is given by a digital twin DT, e.g. a 3D representation, of the technical system TS, which contains workflow related facts FC_{WF}. The workflow related facts FC_{WF} are also deployed dpi and also inputted via the graphical user interface GUI into the processor PRC of the device DEV. This deployment is also normally and preferably done by the user.

Also part of the processor PRC executing the processor-readable program-instructions of the program module PGM for planning and checking the executions of the operation sequences is a planning task PT, which is defined dfn for the specified goal state GS_{WF} and according to the deployed planning domain PD_{WF} based on the facts FC_{WF} and for at least one selected planning operator of the workflow related set of planning operators POP_{1,WF}, ..., POP_{n,WF}.

Furthermore, part of the processor PRC executing the processor-readable program-instructions of the program module PGM for planning and checking the executions of the operation sequences are a planning approach PA according to the defined planning task PT and an execution engine ECE. The functionality of these parts in the context of planning the executions of the operation sequences achieving the goal state GS_{WF} of the technical system workflow WF and checking them through system simulation or hardware execution will be described now together with respect to FIGURE 2, which shows the functionality and way of working of the functional unit FTU implemented in the device DEV according to the FIGURE 1.

So, when the planning task PT is defined dfn for the at least one selected planning operator of the workflow related set of planning operators POP_{1,WF}, ..., POP_{n,WF}, the following steps take place in the context of planning the executions of the operation sequences achieving the goal state GS_{WF} of the technical system workflow WF and checking them through system simulation or hardware execution:
A. Executions of the selected planning operator are checked iteratively in order to find a full plan PL_{f} comprising first operation sequences OPS1 achieving the goal state GS_{WF} by a primary query loop PQL. The primary query loop PQL is run through in consecutive loop iterations until the full plan PL_{f} achieving the goal state GS_{WF} is found or a stopping criterion SCT of the technical system workflow WF is reached by (1) executing exc the at least one selected planning operator through the execution engine ECE, (2) generating grt primary control commands CCₚ due to the at least one executed selected planning operator through the execution engine ECE, (3) accordingly applying apl the primary control commands CCₚ outputted via the communications interface CI to simulate sml the technical system workflow WF and (4) accordingly checking chk the system simulation through primary measurement results MMRₚ of measurements MM, which are fed back to the execution engine ECE.

In the context of the step **A**. it is also possible that, when one or more planning operators of the at least one selected planning operator are selectable several times for checking the executions iteratively in order to find the full plan PL_{f} comprising the first operation sequences OPS1.

**B.** When in step **A.** the full plan PL_{f} is found, the executions of the found full plan PL_{f} achieving the goal state GS_{WF} are checked iteratively by a secondary query loop SQL. The secondary query loop SQL is run through in consecutive loop iterations until the goal state GS_{WF} is achieved by (1) executing exc the full plan PL_{f} through the execution engine ECE, (2) generating grt secondary control commands CCₛ due to the executed full plan PL_{f} through the execution engine ECE, (3) accordingly applying apl the secondary control commands CCₛ outputted via the communications interface CI to simulate sml or to execute in hardware ehw the technical system workflow WF and (4) accordingly checking chk the system simulation or hardware execution through secondary measurement results MMRₛ of measurements MM, which are fed back to the execution engine ECE.

As an option it is preferably possible that the secondary measurement results MMRₛ are fed back to the graphical user interface GUI for outputting them for the user for control purposes.

**C.** When in step **A.** the stopping criterion SCT is reached, for determining a reason RS why no full plan PL_{f} achieving the goal state GS_{WF} could be found executions of (a) at least one partial plan PLₚ on the way to find the full plan PL_{f} achieving the goal state GS_{WF} comprising second operation sequences OPS2 and (b) at least one chosen debugging operator of the workflow related set of debugging operators DOP_{1,WF}, ..., DOP_{m,WF} regarding the selected partial plan PLₚ are checked iteratively by a tertiary query loop TQL. The tertiary query loop TQL is run through in consecutive loop iterations until an intermediate goal state IGS regarding the partial plan PLₚ is achieved by (1) executing exc the at least one selected partial plan PLₚ through the execution engine ECE, (2) executing exc the at least one chosen debugging operator through the execution engine ECE, (3) generating grt tertiary control commands CCₜ due to the at least one partial plan PLₚ and the at least one chosen debugging operator through the execution engine ECE, (4) accordingly applying apl the tertiary control commands CCₜ to simulate sml or to execute in hardware ehw the technical system workflow (WF) and (5) accordingly checking chk the system simulation or hardware execution through tertiary measurement results MMRₜ of measurements MM, which are fed back to the execution engine ECE.

In the context of the step **C.** it is beneficial, when the planning approach PA for determining the stopping criterion SCT is preferably based on hierarchical planning HP.

However, in this case it is beneficial that the tertiary measurement results MMRₜ are or system states of the digital twin DT updated due to the tertiary measurement results MMRₜ are fed back to the graphical user interface GUI for outputting them for the user for control purposes or for considering them by the user for the inputs into the graphical user interface GUI.

So, if due to the intermediate goal state IGS the reason RS for not finding the full plan PL_{f} is determined it is necessary to redefine the planning task PT by using different workflow related inputs concerning at least one of (i) specifying spf another workflow related goal state GS'_{WF}, (ii) deploying dpl other workflow related facts FC'_{WF}, and (iii) deploying dpi additional workflow related planning operators POP_{n+1,WF}, ..., POP_{n+i,WF}.

However, if due to the intermediate goal state IGS the reason RS for not finding the full plan PL_{f} is not determined the step C. is carried out until due to the achievement of the intermediate goal state IGS the reason RS for not finding the full plan PL_{f} is determined.

In the context of the step **C.** it is also preferably possible that the iterative check of executions of the selected partial plan PLₚ and the at least one chosen debugging operator by the tertiary query loop TQL is designed such that - in the consecutive loop iterations until the intermediate goal state IGS regarding the partial plan PLₚ is achieved and due to the intermediate goal state IGS the reason RS for not finding the full plan PL_{f} is determined - the selected partial plan PLₚ keeps unchanged for the execution while (i) the at least one chosen debugging operator is executed exc, (ii) the tertiary control commands CCₜ are generated grt due to the unchanged partial plan PLₚ and the at least one chosen debugging operator, (iii) the tertiary control commands CCₜ to simulate sml or to execute in hardware ehw the technical system workflow WF are applied apl accordingly and (iv) the system simulation or hardware execution are checked chk accordingly through the tertiary measurement results MMRₜ of the measurements MM.

In the technical system TS there is a data logger DL, which logs the control commands CCₚ, CCₛ, CCₜ and the measurements results MMRp, MMRs, MMRt. Due to this logging of the cited data the workflow WF of the technical system TS is characterized and can be outputted, e.g. for a user on a display or for storing into a file.

## Claims

1. Method for planning executions of operation sequences (OPS1, OPS2) achieving goal states of technical system workflows and checking them through system simulation or system hardware execution, wherein
**a**) for a workflow (WF) of a technical system (TS) a workflow related planning domain (PD_{WF}) is given by deploying (dpl) by graphical-user-interface-based inputs workflow related facts (FC_{WF}), which are based on a digital twin (DT), e.g. a 3D representation, of the technical system (TS), a workflow related set of planning operators (POP_{1,WF}, ..., POP_{n,WF}) and a workflow related set of debugging operators (DOP_{1,WF}, ..., DOP_{m,WF}),
**b**) a workflow related goal state (GS_{WF}) by graphical-user-interface-based inputs is specified (spf),
**c**) a planning task (PT) is defined (dfn) for the specified goal state (GS_{WF}) and according to the deployed planning domain (PD_{WF}) based on the facts (FC_{WF}) and for at least one selected planning operator of the workflow related set of planning operators (POP_{1,WF}, ..., POP_{n,WF}),
**d**) by a planning approach (PA) according to the defined planning task (PT)
**d1**) executions of the at least one selected planning operator are checked iteratively in order to find a full plan (PL_{f}) comprising first operation sequences (OPS1) to achieve the goal state (GS_{WF}) by a primary query loop (PQL), in which in consecutive loop iterations until, by <**i**> executing (exc) the at least one selected planning operator <**ii**> generating (grt) primary control commands (CCₚ) due to the at least one executed selected planning operator, <**iii**> accordingly applying (apl) the primary control commands (CCₚ) to simulate (sml) the technical system workflow (WF) and <**iv**> accordingly checking (chk) the system simulation through primary measurement results (MMRₚ) of measurements (MM), the full plan (PL_{f}) achieving the goal state (GS_{WF}) is found or a stopping criterion (SCT) of the technical system workflow (WF) is reached,
**d2**) when in **d1**) the full plan (PL_{f}) is found, the executions of the found full plan (PL_{f}) achieving the goal state (GS_{WF}) are checked iteratively by a secondary query loop (SQL), in which in consecutive loop iterations until by <**i**> executing (exc) the full plan (PL_{f}), <**ii**> generating (grt) secondary control commands (CCₛ) due to the executed full plan (PL_{f}), <**iii**> accordingly applying (apl) the secondary control commands (CCₛ) to simulate (sml) or to execute in hardware (ehw) the technical system workflow (WF) and <**iv**> accordingly checking (chk) the system simulation or system hardware execution through secondary measurement results (MMRₛ) of measurements (MM), the goal state (GS_{WF}) is achieved,
**d3**) when in **d1**) the stopping criterion (SCT) is reached, for determining a reason (RS) why no full plan (PL_{f}) achieving the goal state (GS_{WF}) could be found executions of <**1**> at least one partial plan (PLₚ) on the way to find the full plan (PL_{f}) achieving the goal state (GS_{WF}) comprising second operation sequences (OPS2) and <**2**> at least one chosen debugging operator of the workflow related set of debugging operators (DOP_{1,WF}, ..., DOP_{m,WF}) regarding the selected partial plan (PLₚ) are checked iteratively by a tertiary query loop (TQL), in which in consecutive loop iterations until by <**i**> executing (exc) the at least one selected partial plan (PLₚ), <**ii**> executing (exc) the at least one chosen debugging operator, <**iii**> generating (grt) tertiary control commands (CCₜ) due to the at least one partial plan (PLₚ) and the at least one chosen debugging operator, <**iv**> accordingly applying (apl) the tertiary control commands (CCₜ) to simulate (sml) or to execute in hardware (ehw) the technical system workflow (WF) and <v> accordingly checking (chk) the system simulation or system hardware execution through tertiary measurement results (MMRₜ) of measurements (MM), an intermediate goal state (IGS) regarding the partial plan (PLₚ) is achieved and if due to the intermediate goal state (IGS) the reason (RS) for not finding the full plan (PL_{f}) is determined it is necessary to redefine the planning task (PT) by using different workflow related inputs concerning at least one of specifying (spf) another workflow related goal state (GS'_{WF}), deploying (dpl) other workflow related facts (FC'_{WF}), and deploying (dpl) additional workflow related planning operators (POP_{n+1,WF}, ..., POP_{n+i,WF}) otherwise **c3**) is carried out until due to the achievement of the intermediate goal state (IGS) the reason (RS) for not finding the full plan (PL_{f}) is determined.

2. Method according to claim 1, **characterized in that** the tertiary measurement results (MMRₜ) are or system states of the digital twin (DT) updated by the tertiary measurement results (MMRₜ) are fed back to a graphical user interface (GUI) for outputting them for a user for control purposes or for considering them by a user for the graphical user interface based inputs.

3. Method according to claim 1 or 2, **characterized in that**
when one or more planning operators of the at least one selected planning operator are selectable several times for checking the executions iteratively in order to find the full plan (PL_{f}) comprising the first operation sequences (OPS1).

4. Method according to claim 1, 2 or 3, **characterized in that**
the iterative check of executions of the selected partial plan (PLₚ) and the at least one chosen debugging operator by the tertiary query loop (TQL) is designed such that in the consecutive loop iterations until the intermediate goal state (IGS) regarding the partial plan (PLₚ) is achieved and due to the intermediate goal state (IGS) the reason (RS) for not finding the full plan (PL_{f}) is determined the selected partial plan (PLₚ) is kept unchanged for the execution while
- the at least one chosen debugging operator is executed (exc),
- the tertiary control commands (CCₜ) are generated (grt) due to the unchanged partial plan (PLₚ) and the at least one chosen debugging operator,
- the tertiary control commands (CCₜ) to simulate (sml) or to execute in hardware (ehw) the technical system workflow are applied (apl) accordingly and
- the system simulation or system hardware execution are checked (chk) accordingly through the tertiary measurement results (MMRₜ) of the measurements (MM).

5. Method according to claim 1, 2, 3 or 4, **characterized in that**
the planning approach (PA) is based on hierarchical planning (HP) .

6. Method according to claim 1, 2, 3, 4 or 5, **characterized in that**
the technical system (TS) is a robotic system.

7. Method according to claim 1, 2, 3, 4, 5 or 6, **characterized in that**
the technical system workflow (WF) is outputted via a data logger (DL) of the technical system (TS).

8. Computer-implemented tool (CIT), in particular a computer-program-product, e.g. designed as an application software, called as APP, for planning executions of operation sequences (OPS1, OPS2) achieving goal states of technical system workflows and checking them through system simulation or hardware execution with
- a non-transitory, processor-readable storage medium (STM) having processor-readable program-instructions of a program module (PGM) for planning and checking the executions of the operation sequences (OPS1, OPS2), which is stored in the non-transitory, processor-readable storage medium (STM), and
- a processor (PRC) connected with the storage medium (STM) executing the processor-readable program-instructions of the program module (PGM) to carry out the method according to one of the claims 1 to 7.

9. Device (DEV) for planning executions of operation sequences (OPS1, OPS2) achieving goal states of technical system workflows and checking them through system simulation or hardware execution, with a processor (PRC), a graphical user interface (GUI) and a communications interface (CI) each connected to the processor (PRC) and a non-transitory, processor-readable storage medium (STM) having processor-readable program-instructions of a program module (PGM) for planning and checking the executions of the operation sequences, which is stored in the non-transitory, processor-readable storage medium (STM), wherein the processor (PRC) executing the processor-readable program-instructions of the program module (PGM), the graphical user interface (GUI), the communications interface (CI) and the non-transitory, processor-readable storage medium (STM) with the processor-readable program-instructions of the program module (PGM) form a functional unit (FTU) which is designed in such a way that
**a**) for a workflow (WF) of a technical system (TS) a workflow related planning domain (PD_{WF}) is given by deploying (dpl) workflow related facts (FC_{WF}), which are based on a digital twin (DT), e.g. a 3D representation, of the technical system (TS), a workflow related set of planning operators (POP_{1,WF}, ..., POP_{n,WF}) and a workflow related set of debugging operators (DOP_{1,WF}, ..., DOP_{m,WF}) each inputted via the graphical user interface (GUI),
**b**) a workflow related goal state (GS_{WF}) inputted via the graphical user interface (GUI) is specified (spf),
**c**) a planning task (PT) is defined (dfn) for the specified goal state (GS_{WF}) and according to the deployed planning domain (PD_{WF}) based on the facts (FC_{WF}) and for at least one selected planning operator of the workflow related set of planning operators (POP_{1,WF}, ..., POP_{n,WF}),
**d**) by a planning approach (PA) according to the defined planning task (PT) and an execution engine (ECE)
**d1**) executions of the selected planning operator are checked iteratively in order to find a full plan (PL_{f}) comprising first operation sequences (OPS1) achieving the goal state (GS_{WF}) by a primary query loop (PQL), in which in consecutive loop iterations until, by <**i**> executing (exc) the at least one selected planning operator through the execution engine (ECE) <**ii**> generating (grt) primary control commands (CCₚ) due to the at least one executed selected planning operator through the execution engine (ECE), <**iii**> accordingly applying (apl) the primary control commands (CCₚ) outputted via the communications interface (CI) to simulate (sml) the technical system workflow (WF) and <**iv**> accordingly checking (chk) the system simulation through primary measurement results (MMRₚ) of measurements (MM) fed back to the execution engine (ECE), the full plan (PL_{f}) achieving the goal state (GS_{WF}) is found or a stopping criterion (SCT) of the technical system workflow (WF) is reached,
**d2**) when in **d1**) the full plan (PL_{f}) is found, the executions of the found full plan (PL_{f}) achieving the goal state (GS_{WF}) are checked iteratively by a secondary query loop (SQL), in which in consecutive loop iterations until by <**i**> executing (exc) the full plan (PL_{f}) through the execution engine (ECE), <**ii**> generating (grt) secondary control commands (CCₛ) due to the executed full plan (PL_{f}) through the execution engine (ECE), <**iii**> accordingly applying (apl) the secondary control commands (CCₛ) outputted via the communications interface (CI) to simulate (sml) or to execute in hardware (ehw) the technical system workflow (WF) and <**iv**> accordingly checking (chk) the system simulation or system hardware execution through secondary measurement results (MMRₛ) of measurements (MM) fed back to the execution engine (ECE), the goal state (GS_{WF}) is achieved,
**d3**) when in **d1**) the stopping criterion (SCT) is reached, for determining a reason (RS) why no full plan (PL_{f}) achieving the goal state (GS_{WF}) could be found executions of <**1**> at least one partial plan (PLₚ) on the way to find the full plan (PL_{f}) achieving the goal state (GS_{WF}) comprising second operation sequences (OPS2) and <**2**> at least one chosen debugging operator of the workflow related set of debugging operators (DOP_{1,WF}, ..., DOP_{m,WF}) regarding the selected partial plan (PLₚ) are checked iteratively by a tertiary query loop (TQL), in which in consecutive loop iterations until by <**i**> executing (exc) the at least one selected partial plan (PLₚ) through the execution engine (ECE), <**ii**> executing (exc) the at least one chosen debugging operator through the execution engine (ECE), <**iii**> generating (grt) tertiary control commands (CCₜ) due to the at least one partial plan (PLₚ) and the at least one chosen debugging operator through the execution engine (ECE), <**iv**> accordingly applying (apl) the tertiary control commands (CCₜ) to simulate (sml) or to execute in hardware (ehw) the technical system workflow (WF) and <**v**> accordingly checking (chk) the system simulation or system hardware execution through tertiary measurement results (MMRₜ) of measurements (MM) fed back to the execution engine (ECE), an intermediate goal state (IGS) regarding the partial plan (PLₚ) is achieved and if due to the intermediate goal state (IGS) the reason (RS) for not finding the full plan (PL_{f}) is determined it is necessary to redefine the planning task (PT) by using different workflow related inputs concerning at least one of specifying (spf) another workflow related goal state (GS'_{WF}), deploying (dpl) other workflow related facts (FC'_{WF}), and deploying (dpl) additional workflow related planning operators (POP_{n+1,WF}, ..., POP_{n+i,WF}) otherwise **d3**) is carried out until due to the achievement of the intermediate goal state (IGS) the reason (RS) for not finding the full plan (PL_{f}) is determined.

10. Device (DEV) according to claim 9, **characterized in that**
the tertiary measurement results (MMRₜ) are or system states of the digital twin (DT) updated by the tertiary measurement results (MMRₜ) are fed back to the graphical user interface (GUI) for outputting them for a user for control purposes or for considering them by a user for the inputs into the graphical user interface GUI.

11. Device (DEV) according to claim 9 or 10, **characterized in that**
when one or more planning operators of the at least one selected planning operator are selectable several times for checking the executions iteratively in order to find the full plan (PL_{f}) comprising the first operation sequences (OPS1).

12. Device (DEV) according to claim 9, 10 or 11, **characterized in that**
the iterative check of executions of the selected partial plan (PLₚ) and the at least one chosen debugging operator by the tertiary query loop (TQL) is designed such that in the consecutive loop iterations until the intermediate goal state (IGS) regarding the partial plan (PLₚ) is achieved and due to the intermediate goal state (IGS) the reason (RS) for not finding the full plan (PL_{f}) is determined the selected partial plan (PLₚ) is kept unchanged for the execution while
- the at least one chosen debugging operator is executed (exc),
- the tertiary control commands (CCₜ) are generated (grt) due to the unchanged partial plan (PLₚ) and the at least one chosen debugging operator,
- the tertiary control commands (CCₜ) to simulate (sml) or to execute in hardware (ehw) the technical system workflow (WF) are applied (apl) accordingly and
- the system simulation or system hardware execution are checked (chk) accordingly through the tertiary measurement results (MMRₜ) of the measurements (MM).

13. Device (DEV) according to claim 9, 10, 11 or 12, **characterized in that**
the planning approach (PA) for determining the stopping criterion (SCT) is based on hierarchical planning (HP).

14. Device (DEV) according to claim 9, 10, 11, 12 or 13, **characterized in that**
the technical system (TS) is a robotic system.

15. Device (DEV) according to one of the claims 9 to 14, **characterized by**
a computer into which a computer-implemented tool (CIT) according to claim 6 is loadable.
